# EUROPEAN PATENT APPLICATION

(11) **EP 3 846 248 A1**
(43) Date of publication of application: **07.07.2021**
(21) Application number: 19220239.8
(22) Date of filing: 31.12.2019
(51) Int. Cl.: H01M 4/04, H01M 4/131, H01M 4/505, H01M 4/525, H01M 4/58, H01M 4/62

(54) **CONDUCTIVE POLYMER COATING ONTO A CATHODE ACTIVE MATERIAL**

(71) Applicant: Imec VZW, 3001 Leuven (BE); Katholieke Universiteit Leuven, 3000 Leuven (BE)
(72) Inventor: PITILLAS MARTINEZ, Andrea,Itziar, 3001 Leuven (BE); PUT, Brecht, 3001 Leuven (BE); VEREECKEN, Philippe, 3001 Leuven (BE)
(74) Representative: DenK iP bv

(57) **Abstract**

In a first aspect, the present invention relates to a method for coating a conductive polymer (60) onto a cathode active material (20) for an ion insertion-type electrode (80), comprising: (a) providing an at least partially oxidized cathode active material (20) having an intrinsic electrode potential; and (b) contacting a precursor (51, 52) of the conductive polymer (60) with the at least partially oxidized cathode active material (20), the precursor (51, 52) having a polymerization reduction potential which is lower than the intrinsic electrode potential of the at least partially oxidized cathode active material (20), thereby electrochemically polymerizing the precursor (51, 52) onto the cathode active material (20).

## Description

### Technical field of the invention

The present invention relates to cathode active materials for an ion insertion-type electrode and particularly to the provision of a conductive polymer coating thereon.

### Background of the invention

In light of the growing concern for climate change and the resulting need to meet various national and international climate goals, a lot of research effort is being devoted to the further development of battery technologies. As part thereof, high-voltage cathode active materials-such as lithium nickel manganese cobalt oxide (NMC) or lithium nickel manganese oxide (LNMO)-have gained a lot of interest for the development of high-energy-density ion insertion-type-such as ion intercalation-type-cathodes and corresponding batteries. However, the implementation of these cathodes is currently hindered by the lack of electrolytes with a sufficiently high electrochemical stability window, leading to a shortened cycle lifetime for batteries based such high-voltage cathode active materials.

As reported by Xu et al., coating an ultraconformal protective skin of poly(3,4-ethylenedioxythiophene) (PEDOT) on different NCM cathodes was shown to have a beneficial effect on stabilizing the cathode-electrolyte interphase (XU, Gui-Liang, et al. Building ultraconformal protective layers on both secondary and primary particles of layered lithium transition metal oxide cathodes. Nature Energy, 2019, 1.). However, by oxidative chemical vapour deposition (oCVD) was used as the coating technique, which is not ideal for large-scale industrial manufacturing.

Other techniques for coating a PEDOT conductive polymer onto a cathode active material include in situ electro-polymerization (e.g. during the first charging cycle), as for example disclosed in JP2017004681A, or chemical oxidative polymerization using an external oxidant, as for example described by Liu et al. (LIU, JinFeng, et al. Effectively enhanced structural stability and electrochemical properties of LiNi0.5Mn1.5O4 cathode materials via poly-(3, 4-ethylenedioxythiophene)-in situ coated for high voltage Li-ion batteries. RSC advances, 2019, 9.6: 3081-3091.). However, because these techniques are essentially only limited by the amount of the reagents present, they do not easily allow good control over the thickness and conformality of the resulting coating.

There is thus still a need in the art for better ways to coat a conductive polymer onto a cathode active material.

### Summary of the invention

It is an object of the present invention to provide a good method for coating a conductive polymer onto a cathode active material. It is a further object of the present invention to provide good structures, devices and uses associated therewith. This objective is accomplished by methods, conductive polymer-coated structures, ion insertion-type electrodes, batteries and uses according to the present invention.

It is an advantage of embodiments of the present invention that the conductive polymer can be coated onto the cathode active material based on self-limiting reaction. It is a further advantage of embodiments of the present invention that a relatively conductive polymer and highly conformal coating can be realized. It is yet a further advantage of embodiments of the present invention that the thickness of the coating can be well controlled.

It is an advantage of embodiments of the present invention that the polymer coating can play a significant role in stabilizing the cathode-electrolyte interface.

It is an advantage of embodiments of the present invention that various cathode active material structures can be coated.

It is an advantage of embodiments of the present invention that the cathode active material can be coated prior to assembling the final device (e.g. a battery), or even prior to forming an electrode based on the cathode active material.

It is an advantage of embodiments of the present invention that a conformal coating can be formed not only over the cathode active material as such, but also over a composite material comprising the cathode active material (e.g. the cathode active material and one or more additives intermingled therewith). It is a further advantage of embodiments of the present invention that the coating can help bind the composite material together.

It is an advantage of embodiments of the present invention that an insertion ion can be intercalated into the cathode active material together with forming the conductive polymer coating.

It is an advantage of embodiments of the present invention that they can be realized in relatively straightforward and economical fashion.

In a first aspect, the present invention relates to a method for coating a conductive polymer onto a cathode active material for an ion insertion-type electrode, comprising: (a) providing an at least partially oxidized cathode active material having an intrinsic electrode potential; and (b) contacting a precursor of the conductive polymer with the at least partially oxidized cathode active material, the precursor having a polymerization reduction potential which is lower than the intrinsic electrode potential of the at least partially oxidized cathode active material, thereby electrochemically polymerizing the precursor onto the cathode active material.

In a second aspect, the present invention relates to a conductive polymer-coated structure comprising the cathode active material, obtainable by the method according to any embodiment of the first aspect.

In a third aspect, the present invention relates to an ion insertion-type electrode, comprising the conductive polymer-coated structure according to any embodiment of the second aspect.

In a fourth aspect, the present invention relates to a battery, comprising the ion insertion-type electrode according any embodiment of the third aspect.

In a fifth aspect, the present invention relates to a use of an at least partially oxidized cathode active material for an ion insertion-type electrode, for driving an electrochemical polymerization of a precursor of a conductive polymer, thereby coating the conductive polymer onto the cathode active material.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

FIG 1 and FIG 2 schematically depict conductive polymer-coated structures in accordance with embodiments of the present invention.
FIG 3 schematically depicts different approaches for coating a conductive polymer on a cathode active material layer in accordance with illustrative embodiments of the present invention.
FIG 4, FIG 5 and FIG 8 show Raman spectra of conductive polymer-coated cathode active material layers and bare cathode active material layers in accordance with illustrative embodiments of the present invention.
FIG 6, FIG 7 and FIG 9 show scanning electron microscopy (SEM) images of a conductive polymer-coated cathode active material layers (FIG 7 and FIG 9) and a bare cathode active material layer (FIG 6) in accordance with illustrative embodiments of the present invention.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms over, under and the like in the description and the claims are used for descriptive purposes and not necessarily for describing relative positions. It is to be understood that the terms so used are interchangeable with their antonyms under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. Thus, the scope of the expression "a device comprising means A and B" should not be interpreted as being limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

The following terms are provided solely to aid in the understanding of the invention.

As used herein, and unless otherwise specified, the 'cathode' and 'anode' are respectively the positive and negative electrodes of an electrochemical cell; like is commonly used in the field. As such, the cathode remains the cathode-and the anode remains the anode-regardless of the flow direction of the electrical current and thus for instance regardless of whether the electrochemical cell is being discharged (e.g. through being operated as a galvanic cell) or charged (e.g. through being operated as an electrolytic cell). This is in contrast to a definition based on the flow direction of the electrical current (e.g. where the current enters or exits the electrochemical cell), which is sometimes used in other fields of science. A 'cathode active material' is then an active material in a cathode as defined above.

As used herein, and unless otherwise specified, the intrinsic electrode potential of an (oxidized) cathode active material is the electrical potential due to its chemical nature, e.g. due to the chemical elements making up the cathode active material-including insertion ions, if any-and the oxidation state of these elements. An electrode potential which is-at least partially-due to an extrinsic electrical potential (e.g. a voltage applied by an external voltage source) is therefore not an intrinsic electrode potential. In other words, the intrinsic electrode potential of the cathode active material is the electrical potential left in absence of (e.g. after removing) any extrinsic electrical potential (e.g. without applying any external voltage). The intrinsic electrode potential may be measured directly versus a reference electrode (e.g. Li⁺/Li).

In this context, it is useful to introduce also the 'state-of-charge' (SOC) of the cathode active material, which is the degree to which the cathode active material is oxidized. When the active cathode material is oxidized (e.g. the oxidation state of a transition metal is increased, such as Co(III) to Co(IV) or Ni(II) to Ni(III)), an insertion ion (e.g Li⁺) is typically removed from the active cathode material. The state-of-charge is thereby also related to the degree to which the cathode active material is depleted of insertion ions. As such, the intrinsic electrode potential of the cathode active material depends on its state-of-charge, where the intrinsic electrode potential will be highest for a maximum state-of-charge and lowest for a minimum state-of-charge. The state-of-charge may for example be expressed as a value of from 0 to 1, where 0 coincides with a fully reduced cathode active material (e.g. saturated with insertion ions) and 1 coincides with a fully oxidized cathode active material (e.g. depleted of insertion ions), or as a corresponding percentage value. For example, the state-of-charge may be indicated by the value x in a reaction such as

Li₁₋ₓNi_{0.5}Mn_{1.5}O₄ + xe⁻ + xLi⁺ ⇄ LiNi_{0.5}Mn_{1.5}O₄.

Plots of the intrinsic electrode potential versus state-of-charge are available in literature or can determined experimentally. For example, such plots can be obtained using a potentiostatic intermittent titration technique (PITT) or a galvanostatic intermittent titration technique (GITT).

As used herein, and unless otherwise specified, the polymerization reduction potential of a polymer precursor is the minimum reduction potential needed to achieve oxidative polymerization of the precursor under the applicable reaction conditions (e.g. of concentration, temperature, pressure or chemical environment, such as pH). It is thus the reduction potential associated with the polymerization half-reaction.

When it is said that the precursor has a polymerization reduction potential which is lower than the intrinsic electrode potential of the at least partially oxidized cathode active material, it is meant that the polymerization reduction potential expressed with respect to the same reference point as for the intrinsic electrode potential (e.g. vs Li⁺/Li) is lower than said intrinsic electrode potential.

Both the intrinsic electrode potential and the polymerization reduction potential may in embodiments depend on the reaction conditions and measurement technique that is used. Note however that it is within the present invention typically not required to know the exact values of the intrinsic electrode potential and the polymerization reduction potential. Indeed, if-in absence of another driving force, such as an externally applied voltage or an oxidant (other than the at least partially oxidized cathode active material)-the precursor starts polymerizing upon contact with the at least partially oxidized cathode active material, then the polymerization reduction potential of the precursor is evidently lower than the intrinsic electrode potential of the at least partially oxidized cathode active material.

In a first aspect, the present invention relates to a method for coating a conductive polymer onto a cathode active material for an ion insertion-type electrode, comprising: (a) providing an at least partially oxidized cathode active material having an intrinsic electrode potential; and (b) contacting a precursor of the conductive polymer with the at least partially oxidized cathode active material, the precursor having a polymerization reduction potential which is lower than the intrinsic electrode potential of the at least partially oxidized cathode active material, thereby electrochemically polymerizing the precursor onto the cathode active material.

It was surprisingly realized within the present invention that several cathode active materials which are interesting for electrode and battery applications have-upon oxidation-an intrinsic electrode potential which high enough to electrochemically drive the oxidative polymerization for at least some conductive polymers. Moreover, it was surprisingly found that this reaction is self-limiting, because-without being bound by theory-the amount of at least partially oxidized cathode active material is limited and increasingly diminished as the thickness increases (since it is reduced in the process), while at the same time the conductive polymer forms a barrier onto the cathode active material which with growing thickness increasingly hinders the reaction, for example by hindering the ion insertion step into the covered cathode. The self-limiting nature of the reaction also promotes a highly degree of conformality for the conductive polymer coating, as the reaction speed will be faster where the coating would be thinner and slower where it would be thicker. This is in contrast to examples in the prior art where the polymerization is driven by an oxidant (other than the at least partially oxidized cathode active material) or an externally applied voltage-even if the cathode active material is used as a proxy to deliver that voltage onto the conductive polymer precursor, thereby potentially becoming itself oxidized in the process-where the conductive polymer coating does not form a barrier between the oxidant and the precursor (e.g. because they are both situated on the same side of the barrier) and/or where the driving force for the oxidative polymerization is essentially not limited and the reaction only stops when the precursor itself is used up.

In embodiments, the cathode active material for an ion insertion-type electrode may be for an ion intercalation-type electrode. Ion intercalation may be regarded as a example of ion insertion, in which the ion is inserted into a crystalline lattice (i.e. the ion is intercalated). In embodiments, the cathode active material may comprise the insertion ion inserted or intercalated into the cathode active material. In other embodiments, the cathode active material may be in a state where the insertion ion is not present (e.g. it has been fully extracted). In embodiments, the cathode active material may be in the form a layer or a particle. In embodiments, the cathode active material may be comprised in a composite material. The composite material may for example comprise particles of the cathode active material and one or more additives. In embodiments, the one or more additives may comprise a binder (e.g. polyvinylidene difluoride, PVDF), and optionally a conductive agent (e.g. carbon black) between the cathode active material particles. Alternatively or complementary, the function of conductive agent may also be taken up by the conductive polymer (e.g. in the form of a conductive polymer coating enveloping the cathode active material particles, cf. infra). In embodiments, coating the conductive polymer onto the cathode active material may comprise coating the conductive polymer onto the composite material as a whole (e.g. onto the cathode active material particles and onto the additives). In such a case, the conductive polymer coating may advantageously assist in binding the composite material together. Here, a distinction can be made between a conductive additive (e.g. a conductive agent) and a non-conductive additive (e.g. a non-conductive binder). Without being bound by theory, it is believed that-since it is conductive and in contact with the active cathode material-a conductive additive has an electrical potential equal to the intrinsic potential of the active cathode material and thus galvanic coupling occurs in which oxidative polymerization (half-reaction) takes place at the conductive additive and the complementary reduction half-reaction (to complete the redox reaction) takes place at the active material with ion insertion. As such, the conductive polymer coating will grow out from both the cathode active material and the conductive additive(s), and the state of charge will determine the total conductive polymer coating thickness over both. Since e.g. carbon black as a conductive agent is a nano-carbon material with typically a considerable surface area, it can be pertinent to take this factor into account. Conversely, the same effect will typically not occur for a non-conductive additive, so that the conductive polymer coating will typically not grow out of that additive. Notwithstanding, depending on the size of the non-conductive agent, it's location in the composite material and the polymer coating, the conductive polymer coating growing out from the cathode active material and/or the conductive additive(s) may still come to engulf the non-conductive additive as a matter of course. If coating out also from the binder directly is nevertheless desired, a conductive binder can be used.

In embodiments, step a may comprise oxidizing the cathode active material. In preferred embodiments, oxidizing the cathode active material may be performed in absence of the precursor (e.g. before step b). In embodiments, oxidizing the cathode active material may comprise extracting an insertion ion (e.g. an intercalated ion) therefrom. For example, the cathode active material may comprise inserted Li⁺ and oxidizing the cathode active material may comprise delithiating the cathode active material. In embodiments, the at least partially oxidized cathode active material may thus be a delithiated cathode active material. In embodiments, step a may comprise chemically or electrochemically oxidizing the cathode active material. Chemical oxidation may for example comprise the use of an oxidant, such as nitronium tetrafluoroborate (NO₂BF₄). Electrochemical oxidation typically comprises the application of an external potential on the cathode active material to drive the oxidation.

The at least partially oxidized cathode active material is at least partially oxidized to the degree that the intrinsic electrode potential is higher than the polymerization reduction potential (i.e. its state of charge is sufficiently high therefor). Likewise, the cathode active material is selected such that-after at least partial oxidation-its intrinsic electrode potential can exceed the polymerization reduction potential (i.e. it would at least exceed the polymerization reduction for a state-of-charge of 1). In embodiments, the intrinsic electrode potential of the at least partially oxidized cathode active material may be at least 3.8 V vs. Li⁺/Li, preferably at least 4.0 V, more preferably at least 4.2 V, yet more preferably at least 4.4 V, yet even more preferably at least 4.6 V, most preferably at least 4.8 V. In embodiments, the polymerization reduction potential may be at least 2% lower than the intrinsic electrode potential of the at least partially oxidized cathode active material, preferably at least 5%, more preferably at least 10%. In some embodiments, the at least partially oxidized cathode active material may be fully oxidized. Because the amount of polymerization that can occur depends i.a. on the state-of-charge of the at least partially oxidized cathode active material (i.e. on the amount of oxidized cathode active material), controlling the degree of oxidation advantageously allows to control the thickness of the eventual conductive polymer coating.

In embodiments, step b may be performed after completing step a. In embodiments, step b may comprise contacting with the at least partially oxidized cathode active material a vapour or liquid comprising the precursor. In some embodiments, the liquid comprising the precursor may comprise an electrolyte (e.g. LiClO₄). For example, the liquid may be an electrolyte solution. In other preferred embodiments, the liquid comprising the precursor may be with the proviso that it does not comprise an electrolyte. For example, the liquid may be a liquid precursor or may be a solution of the precursor without electrolyte. In embodiments, step b may be performed in absence of an externally applied voltage. In embodiments, step b may be performed in absence of an oxidant (other than the at least partially oxidized cathode active material). In preferred embodiments, step b may be performed in absence of both the externally applied voltage and the oxidant.

In embodiments, the cathode active material may have a spinel (e.g. LiMn_{1.5}Ni_{0.5}O₄ or LMNO), layered (e.g. LiCoO₂ or LCO, Li[Ni_{1-x-y}MnₓCo_{y}]O₂ or NMC, Li₁₊ₓMn₁₋ₓO₂, or Li[Ni_{1-x-y}CoₓAl_{y}]O₂ or NCA), NASICON (e.g. Li₃V₂(PO₄)3) or olivine (e.g. LiCoPO₄) structure; preferably a spinel or layered structure.

In embodiments, the conductive polymer precursor may be a monomer or an adduct thereof (e.g. a dimer, a trimer, ..., or an oligomer). In embodiments, the conductive polymer may be at least electrically conductive and preferably also ionically conductive. The conductive polymer-which may also be referred to as a conjugated polymer-typically comprises a conjugated system of delocalized electrons which spans at least a few monomers (e.g. at least 5, preferably at least 8, yet more preferably at least 10). As such, the precursor may often comprise an arene, such as a heteroarene, for realizing such a conjugated system. In embodiments, the precursor may be selected from a thiophene, (e.g. 3,4-ethylenedioxythiophene), a pyrrole, a selenophene, a tellurophene or a furan; or an adduct thereof. In embodiments, the conductive polymer may be a homopolymer or a copolymer.

In embodiments, the method may comprise a further step c of: (c) intercalating the cathode active material with an alkali metal ion (e.g. Li+, Na⁺ or K⁺) or an alkaline earth metal ion (e.g. Mg²⁺ or Ca²⁺). In embodiments, the alkali or alkaline earth metal ion may be the insertion ion for the ion insertion-type electrode.

In some embodiments, step c may be performed after step b. In such embodiments, intercalating the cathode active material with the alkali metal ion or alkaline earth metal ion may comprise replacing another intercalated ion (e.g. H⁺) with said alkali or alkaline earth metal ion.

In other embodiments, step c may be performed concurrently with step b. In embodiments, the precursor may comprise an alkali metal or an alkaline earth metal. In embodiments, the alkali or alkaline earth metal may be released-e.g. as the corresponding ion-upon polymerization of the precursor (i.e. it may replace a hydrogen ion that is released upon polymerization). In embodiments, the released alkali or alkaline earth metal may intercalate into the cathode active material. Preferably, all hydrogen atoms in the precursor which are released upon polymerization may be replaced by an alkali or earth alkali metal. For example, in the case of EDOT (51), the alkali metal or alkaline earth metal may be at the 2 and/or 5 position, such as 2,5-dilithiated EDOT (51). For precursors without alkali or alkaline earth metal, the polymerization reaction typically involves the release of H⁺, which then intercalates into the now reduced cathode active material. However, this intercalated H⁺ may have a negative effect on the performance of the cathode active material (e.g. on the performance of the corresponding ion insertion-type electrode ion). As such, it is advantageous to replace these hydrogen atoms with a suitable alkali or alkaline earth metal, thereby immediately intercalating the desired ion into the cathode active material.

In embodiments, any feature of any embodiment of the first aspect may independently be as correspondingly described for any embodiment of any of the other aspects.

In a second aspect, the present invention relates to a conductive polymer-coated structure comprising the cathode active material, obtainable by the method according to any embodiment of the first aspect.

The conductive polymer coating may advantageously help to stabilize the cathode-electrolyte interphase.

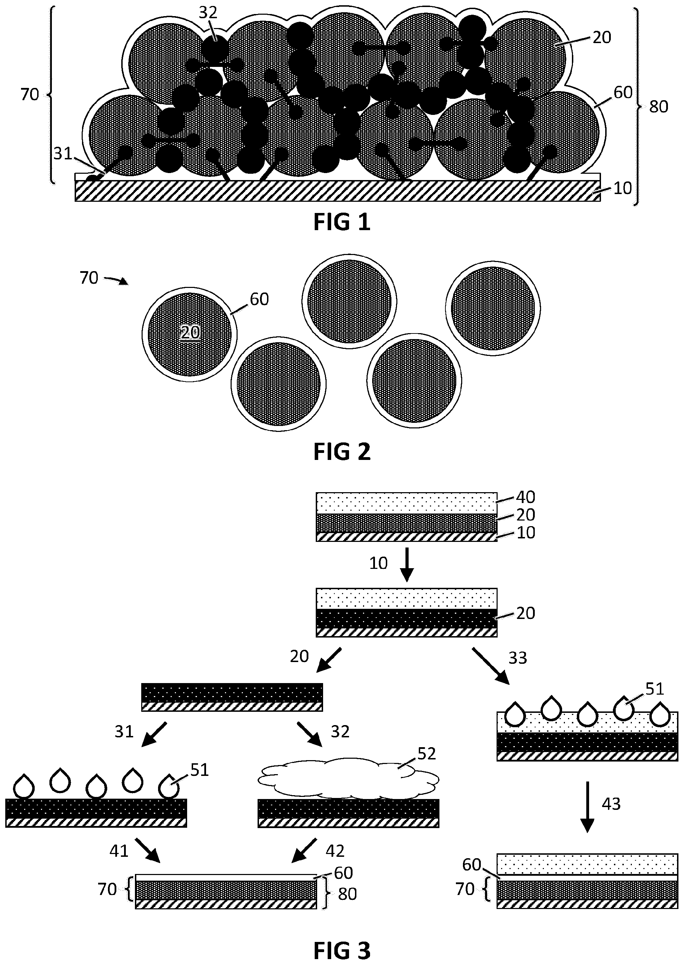

In embodiments, the conductive polymer-coated structure may be a particle of cathode active material enveloped by the conductive polymer coating. Such particles are for example schematically depicted in FIG 2.

In embodiments, the conductive polymer-coated structure may be a layer comprising the cathode active material and having the conductive polymer coating thereon. In some embodiments, the conductive polymer-coated structure may be layer consisting of the cathode active material. In other embodiments, the conductive polymer-coated structure may be a composite comprising the cathode active material (e.g. particles thereof) and one or more further materials. An electrode based on such a composite is for example schematically depicted in FIG 1.

In embodiments, the conductive polymer coating having a minimum thickness and a maximum thickness, wherein the minimum thickness may be at least 80% of the maximum thickness, preferably at least 90%, more preferably at least 95%, yet more preferably at least 98%. In embodiments, an average thickness of the conductive polymer coating may be from 1 to 50 nm, preferably from 3 to 30 nm, yet more preferably from 5 to 20 nm. The conductive polymer coating may thus advantageously have a high degree of conformality and/or a small thickness, like an ultraconformal protective skin.

In embodiments, any feature of any embodiment of the second aspect may independently be as correspondingly described for any embodiment of any of the other aspects.

In a third aspect, the present invention relates to an ion insertion-type electrode, comprising the conductive polymer-coated structure according to any embodiment of the second aspect.

In embodiments, the ion insertion type-electrode may be an ion insertion type-cathode.

In embodiments, the ion insertion type-electrode may be for use in a battery or a supercapacitor.

In embodiments, any feature of any embodiment of the third aspect may independently be as correspondingly described for any embodiment of any of the other aspects.

In a fourth aspect, the present invention relates to a battery, comprising the ion insertion-type electrode according any embodiment of the third aspect.

In embodiments, the battery may be an alkali or alkaline earth battery, such as a Li battery (e.g. a Li-ion, Li-polymer, Li-metal or solid-state Li-metal battery), a Na battery, a K battery, a Mg battery or a Ca battery.

In embodiments, the battery may be a rechargeable battery-which may also be referred to as a secondary battery.

In embodiments, any feature of any embodiment of the fourth aspect may independently be as correspondingly described for any embodiment of any of the other aspects.

In a fifth aspect, the present invention relates to a use of an at least partially oxidized cathode active material for an ion insertion-type electrode, for driving an electrochemical polymerization of a precursor of a conductive polymer, thereby coating the conductive polymer onto the cathode active material.

In embodiments, the intrinsic electrode potential of the cathode active material may drive the electrochemical polymerization.

In embodiments, the conductive polymer may be coated on a further material (e.g. a conductive additive, cf. supra). In embodiments, the cathode active material and the further material may be together comprised in a composite material (c.f. supra).

In embodiments, any feature of any embodiment of the fifth aspect may independently be as correspondingly described for any embodiment of any of the other aspects.

The invention will now be described by a detailed description of several embodiments of the invention. It is clear that other embodiments of the invention can be configured according to the knowledge of the person skilled in the art without departing from the true technical teaching of the invention, the invention being limited only by the terms of the appended claims.

### Example 1: Electrochemical polymerization of PEDOT on a layer of delithiated NMO

Three different illustrative approaches are described to coat-by electrochemical polymerization-poly(3,4-ethylenedioxythiophene) (PEDOT) onto a layer of Ni_{0.5}Mn_{1.5}O₄ (NMO) as a high-voltage delithiated cathode active material. The precursor used is in each case the monomer 3,4-ethylenedioxythiophene (EDOT (51)). An overview of these different procedures, yielding an ion insertion-type electrode (80) comprising a conductive polymer-coated structure (70) on a current collector (10), is shown in FIG 3.

### Example 1a: Electrochemical polymerization from the liquid phase

An electrode comprising a layer of LiNi_{0.5}Mn_{1.5}O₄ (LNMO) cathode active material (20) with a thickness of about 100 nm on a current collector (10)-e.g. 70 nm Pt/10nm TiO₂/300 nm SiO₂/Si-was first provided in an electrolyte solution (40) comprising 1M LiClO₄ in propylene carbonate (PC).

A selected area of the LNMO (20) was then electrochemically delithiated (310) using a three-electrode cell (LNMO/current collector as working electrode, Li strip as counter electrode and a second Li strip as reference electrode), thereby locally-at least partially-oxidizing the LNMO (20) to NMO (20) (represented in FIG 3 by a different pattern fill). Alternatively, the LNMO (20) can be chemically delithiated; e.g. using nitronium tetrafluoroborate (NO₂BF₄) as oxidant. Partial or full delithiation of LNMO using a 0.1 M solution of nitronium tetrafluoroborate in acetonitrile was for example described by Saravanan et al. (SARAVANAN, Kuppan, et al. A study of room-temperature Li x Mn 1.5 Ni 0.5 O 4 solid solutions. Scientific reports, 2015, 5: 8027.).

Right after delithiation, the LNMO-NMO sample was removed from the electrolyte solution (40), rinsed with PC and dried overnight at 80 °C under reduced pressure (320).

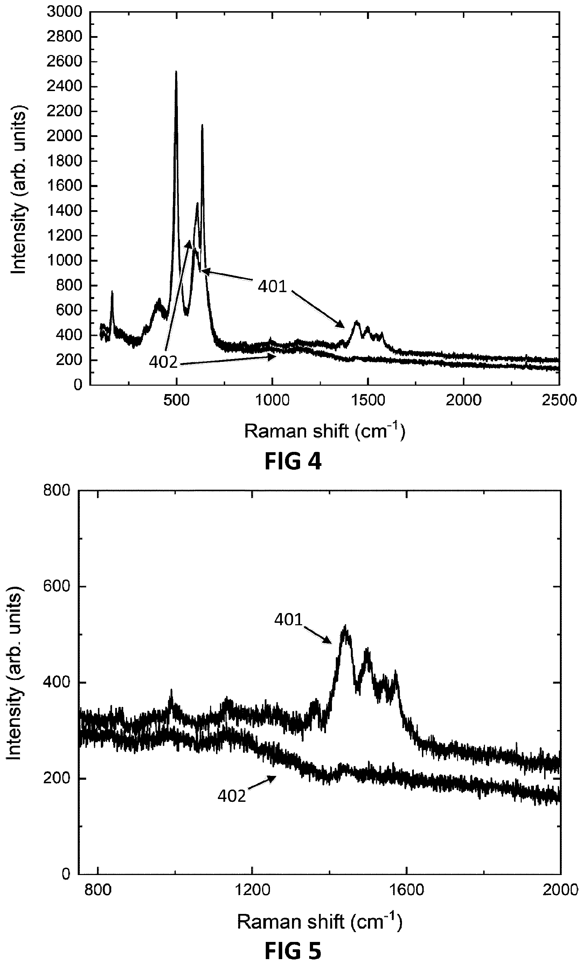

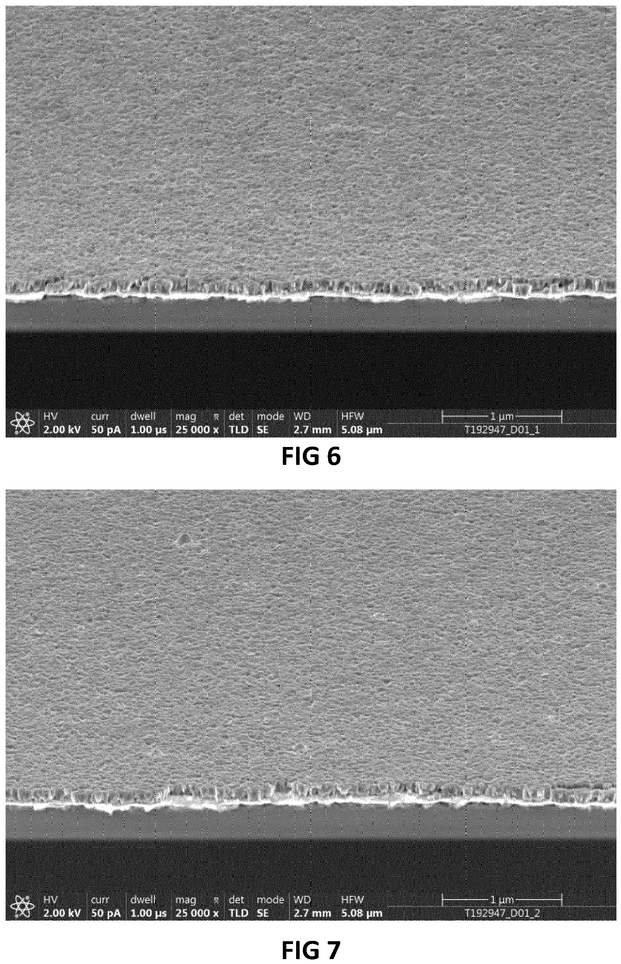

The NMO sample was next placed on a hotplate at 120 °C inside a glovebox and pure liquid EDOT (51) was drop cast (331) onto the LNMO-NMO layer (20). This resulted in polymerization of the EDOT in the area where LNMO had been delilithated to yield (341) a thin and conformal PEDOT coating (60) onto the NMO (20), which was not discernible by the naked eye. The presence of PEDOT in the delithiated area was however confirmed by Raman spectroscopy. In this respect, FIG 4 shows Raman spectra of the LNMO-NMO layer for locations inside (401) and outside (402) said delithiated area; where the fingerprint around 1300 to 1700 cm⁻¹ was attributed to PEDOT. FIG 5 shows a magnified portion of the same graphs. Scanning electron microscopy (SEM) was also performed, but no clear difference could be observed between locations inside (FIG 6) and outside (FIG 7) the delithiated area. Nevertheless, this is in agreement with the formation of a very thin and conformal PEDOT coating (e.g. an ultraconformal skin), thereby preserving the morphology of the NMO.

Without being bound by theory, it is believed that the intrinsic electrode potential of the NMO (about 4.75 V vs Li⁺/Li for the NMO⁻/NMO half reaction) is larger than the polymerization reduction potential of EDOT (about 4.247 V vs Li⁺/Li). As such, upon contact between both, NMO will readily reduce to NMO⁻ (i.e. Ni⁴⁺ will reduce to Ni³⁺ or Ni²⁺)and thereby act as an oxidant for the oxidative polymerization into PEDOT. The polymerization reaction further yields H⁺ which intercalates into the NMO and thereby balances the charge thereof. This reaction is moreover self-limiting, as the thickening PEDOT coating forms a barrier which increasingly hinders further oxidation of PEDOT precursors (e.g. EDOT and/or adducts thereof) by the delithiated NMO. For the same reason, a highly conformal coating is formed, as during formation thereof the reaction rate will be quicker where the coating is still thinner and slower where it is thicker.

### Example lb: Electrochemical polymerization from the vapour phase

Example 1a is repeated, but rather than using drop casting, 150 µ1 of EDOT (52) is vapour deposited (332) at 100 °C under vacuum for about 2 h. In the vapour deposition chamber used, the delithiated LNMO-NMO sample is held by a nylon sample holder and the EDOT is placed in a ceramic crucible. Also in this case, a thin and conformal PEDOT coating (60) onto the NMO (20) is achieved (342), which is again not discernible by the naked eye. Raman spectroscopy and SEM yield comparable results as for the delithiated area in example 1a.

### Example 1c: Electrochemical polymerization from the electrolyte solution

Example 1a was repeated, but rather than first removing the electrolyte solution (40), EDOT (51) was added (333) to said solution (40) directly after removing the Li strips. The LNMO-NMO sample was then dried for 1h at 80 °C under reduced pressure (343) to yield a PEDOT coating (60) onto the LNMO-NMO layer (20) which could be clearly discernible by the naked eye.

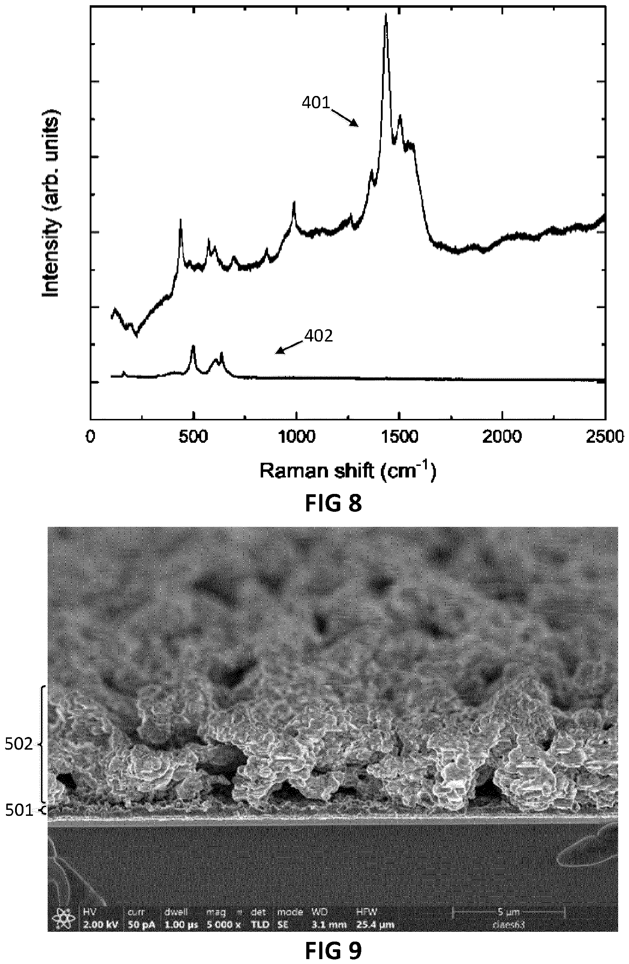

The presence of PEDOT in the delithiated area was again confirmed by Raman spectroscopy. FIG 8 shows Raman spectra of the LNMO-NMO layer with (801) and without (802) PEDOT coating. On top of a generally increased signal, the PEDOT fingerprint around 1300 to 1700 cm⁻¹ was again clearly present. FIG 5 shows a magnified portion of the same graphs. SEM revealed the presence of a fairly thick (a few µm) PEDOT coating. The thick coating appears to comprise a relatively thin and conformal first portion (501), but it is a collection of lumps and gaps (502) that particularly dominates its general morphology.

Without being bound by theory, it is believed that in this case the electrolyte facilitates polymerization, e.g. by mediating the redox reaction between the conductive polymer precursors and the cathode active material. However, in doing so, the self-limiting behaviour of the reaction is counteracted, thus resulting in a thicker and more irregular coating.

### Example 2: Electrochemical polymerization of a conductive polymer on a layer of at least partially oxidized cathode active material

Any of the previous examples can be repeated with a different conductive polymer precursor (cf. supra) and/or a different cathode active material (cf. supra); similar results can be obtained, provided that the at least partially oxidized cathode active material has a higher intrinsic electrode potential than the polymerization reduction potential of the conductive polymer precursor.

### Example 3: Electrochemical polymerization of a conductive polymer on a composite electrode

Any of the previous examples can be repeated using a composite electrode comprising the cathode active material, as opposed to a layer of the cathode active material. The composite electrode may for example comprise a current collector (e.g. Pt) with particles of the cathode active material thereon, a conductive agent (e.g. carbon black) between the particles and a binder (e.g. polyvinylidene difluoride, PVDF). Driven by reduction of the at least partially oxidized cathode active material, a thin and conformal conductive polymer coating can be formed over the composite electrode as a whole (i.e. over the particles of the cathode active material, over the conductive agent and, optionally, over the binder).

This is schematically depicted in FIG 1, showing an ion insertion-type electrode (80) comprising the conductive polymer-coated structure (70) on a current collector (10). The conductive polymer-coated structure (70) comprises a conductive polymer coating (60) over cathode active material particles (20) intermingled with a conductive agent (32) and a binder (31).

### Example 4: Electrochemical polymerization of a conductive polymer on cathode active material particles

Any of the previous examples can be repeated using particles of the cathode active material, as opposed to a layer thereof. The cathode active material particles can for example be present in a slurry. Driven by reduction of the at least partially oxidized cathode active material, a thin and conformal conductive polymer-coating can be formed around the particles.

This is schematically depicted in FIG 2, showing a conductive polymer-coated structure (70) comprising a conductive polymer coating (60) over a cathode active material particle (20).

Given the conductivity of the so-formed coating, the coating may in this case not only be used as a barrier for improving the cathode-electrolyte interphase but also (i.e. additionally or alternatively) as a conductive agent between the particles. A composite electrode as described above may thus for example be formed in which a separate conductive agent is omitted and this role is taken up by the conductive polymer-coating around the cathode active material particles.

### Example 5: Electrochemical polymerization of a conductive polymer on a cathode active material using a precursor comprising an alkali metal or an alkaline earth metal

Any of the previous examples can be repeated using a precursor comprising an alkali metal or alkaline earth metal, preferably instead of the hydrogen atoms which are liberated-typically as positive hydrogen ions (i.e. protons)-during the polymerization. The alkali metal or alkaline earth metal can for example correspond to the envisage intercalation ion (e.g. Li for a Li-battery, Na for a Na-battery, etc.). Since intercalation of hydrogen can have a negative effect on the performance of the cathode active material, it is advantageous if this can be avoided by replacing these hydrogen atoms in the precursor.

For instance, rather than EDOT as such, 2,5-dilithiated EDOT can be used, thereby directly intercalating Li into the cathode active material as part of the polymerization reaction. 2,5-dilithiated EDOT can for example be synthesized as previously described by Choi et al. (CHOI, Jong Seob, et al. Electrical and physicochemical properties of Poly (3, 4-ethylenedioxythiophene)-based organic-inorganic hybrid conductive thin films. Thin Solid Films, 2009, 517.13: 3645-3649.).

It is to be understood that although preferred embodiments, specific constructions and configurations, as well as materials, have been discussed herein for devices according to the present invention, various changes or modifications in form and detail may be made without departing from the scope and technical teachings of this invention. For example, any formulas given above are merely representative of procedures that may be used. Functionality may be added or deleted from the block diagrams and operations may be interchanged among functional blocks. Steps may be added or deleted to methods described within the scope of the present invention.

## Claims

1. A method for coating a conductive polymer (60) onto a cathode active material (20) for an ion insertion-type electrode (80), comprising:
a. providing an at least partially oxidized cathode active material (20) having an intrinsic electrode potential; and
b. contacting a precursor (51, 52) of the conductive polymer (60) with the at least partially oxidized cathode active material (20), the precursor (51, 52) having a polymerization reduction potential which is lower than the intrinsic electrode potential of the at least partially oxidized cathode active material (20), thereby electrochemically polymerizing the precursor (51, 52) onto the cathode active material (20).

2. The method according to claim 1, wherein the intrinsic electrode potential of the at least partially oxidized cathode active material (20) is at least 3.8 V vs. Li⁺/Li, preferably at least 4.0 V, more preferably at least 4.2 V, yet more preferably at least 4.4 V, yet even more preferably at least 4.6 V, most preferably at least 4.8 V.

3. The method according to any of the previous claims, the polymerization reduction potential is at least 2% lower than the intrinsic electrode potential of the at least partially oxidized cathode active material (20), preferably at least 5%, more preferably at least 10%.

4. The method according to any of the previous claims, wherein the at least partially oxidized cathode active material (20) is a delithiated cathode active material (20).

5. The method according to any of the previous claims, comprising a further step c of:
c. intercalating the cathode active material (20) with an alkali metal ion or an alkaline earth metal ion.

6. The method according to any of the previous claims, wherein the precursor (51, 52) comprises an alkali metal or an alkaline earth metal.

7. The method according to any of the previous claims, wherein step a comprises chemically or electrochemically oxidizing the cathode active material (20).

8. The method according to any of the previous claims, wherein step b comprises contacting with the at least partially oxidized cathode active material (20) a vapour or liquid comprising the precursor (51, 52).

9. A conductive polymer-coated structure (70) comprising the cathode active material (20), obtainable by the method according to any of the previous claims.

10. The conductive polymer-coated structure (70) according to claim 9, being a particle of cathode active material (20) enveloped by the conductive polymer (60) coating (60).

11. The conductive polymer-coated structure (70) according to claim 9 or 10, being a layer comprising the cathode active material (20) and having the conductive polymer coating (60) thereon.

12. The conductive polymer-coated structure (70) according to any of claims 9 to 11, the conductive polymer coating (60) having a minimum thickness and a maximum thickness, wherein the minimum thickness is at least 80% of the maximum thickness, preferably at least 90%, more preferably at least 95%, yet more preferably at least 98%.

13. An ion insertion-type electrode (80), comprising the conductive polymer-coated structure (70) according to any of claims 9 to 12.

14. A battery, comprising the ion insertion-type electrode (80) according claim 13.

15. Use of an at least partially oxidized cathode active material (20) for an ion insertion-type electrode (80), for driving an electrochemical polymerization of a precursor (51, 52) of a conductive polymer (60), thereby coating the conductive polymer (60) onto the cathode active material (20).
